# EUROPÄISCHE PATENTSCHRIFT

(11) **EP 0 636 881 B1**
(45) Veröffentlichungstag und Bekanntmachung des Hinweises auf die Patenterteilung: **07.01.1998**
(21) Anmeldenummer: 94110139.6
(22) Anmeldetag: 29.06.1994
(51) Int. Cl.: G01N 29/04

(54) **Verfahren und Einrichtung zur Qualitätsprüfung von Bauteilen mittels Klangmessung, insbesondere von Keramikartikeln**
Method and apparatus for quality control of objects in particular ceramic articles, by measuring sounds
Procédé et dispositif pour le contrôle de qualité de produits en particulier des articles céramiques, par mesure de son

(30) Priorität: 24.07.1993 DE 4324976
(43) Veröffentlichungstag der Anmeldung: 01.02.1995
(73) Patentinhaber: ERLUS BAUSTOFFWERKE AG, 84088 Neufahrn (DE)
(72) Erfinder: Schmitt-Thomas, Karlheinz, Prof., D-80639 München (DE); Wilhelm, Markus, Dipl.-Ing., D-81539 München (DE); Höninger, Hans, Dipl.-Phys., D-80335 München (DE)
(74) Vertreter: LOUIS, PÖHLAU, LOHRENTZ & SEGETH

(56) Entgegenhaltungen:
- EP-A- 0 056 772
- WO-A-91/10131
- US-A- 5 144 838
- ERZMETALL, Bd.45, Nr.6, Juni 1992, WEINHEIM, DE Seiten 325 - 328, XP279117 J.F.HUIZING 'Anoden-Qualitätskontrolle mittels akustischer Messungen.'

## Beschreibung

Die Erfindung betrifft ein Verfahren zur Qualitätsprüfung von Bauteilen mittels Klangmessung mit den Merkmalen gemäß dem Oberbegriff des Anspruches 1. Weiterhin betrifft die Erfindung eine Einrichtung zur Durchführung dieses Verfahrens mit den Merkmalen gemäß dem Oberbegriff des Anspruches 12.

Die Qualitätsprüfung mittels Klangmessung zur Überwachung der Fehlerfreiheit von Bauteilen ist ein altes und bewährtes Prüfverfahren. Es findet u.a. in der keramischen Industrie und dort insbesondere bei der Herstellung von Dachziegeln Anwendung. An keramischen Produkten, z.B. den genannten Dachziegeln, können aufgrund des Brennvorganges Schwindungs- oder Kühlungsrisse auftreten, die das keramische Produkt unbrauchbar machen, weil sie früher oder später bei der Benutzung zur Zerstörung führen. In der Dachziegel-Industrie ist es bekannt, die Qualitätsprüfung mittels Klangmessung in der Weise auszuführen, daß die auf einem Transport- oder Förderband befindlichen Dachziegel mit einem Hammer angeschlagen werden und von einem Prüfer der dadurch erzeugte Klang beurteilt wird. Diese subjektive Beurteilungsweise ist bezüglich ihres Ergebnisses sehr stark von der Erfahrung und der Aufmerksamkeit des Prüfers sowie davon abhängig, ob Nebengeräusche in der Halle das Klangbild beeinflussen. Daraus resultieren vielfach Fehlbeurteilungen dahin, daß Sprünge oder Risse aufweisende Dachziegel nicht als Ausschuß erkannt oder einwandfreie Dachziegel als fehlerhaft beurteilt werden.

Um die Unsicherheit in Bezug auf die Fehlererkennbarkeit bei dieser subjektiven Beurteilung zu vermeiden, sind ein Verfahren und eine zu dessen Durchführung bestimmte Einrichtung der eingangs genannten Art entwickelt und bekannt geworden (DE-Zeitschrift "Ziegelindustrie" 1/92). Bei diesem bekannten Verfahren werden zunächst Klangmuster von guten und schlechten Dachziegeln vorerstellt und in einem Rechner gespeichert, die weitgehend nach der vorstehend beschriebenen herkömmlichen Methode der Klangmessung bewertet wurden. Die Klangmuster liegen in dem Rechner in Form einer Amplituden-Frequenz-Analyse vor, in welcher den einzelnen Frequenzanteilen des Klangspektrums die zugehörigen Schallintensitäten (Amplituden) zugeordnet sind. Diese Klangmuster bilden eine Bezugsbasis, mit der entsprechende Klangspektren der zu prüfenden Dachziegel verglichen werden. Zeigt der Klang der zu prüfenden Dachziegel charakteristische Abweichungen von den vorgegebenen Klangmustern, so werden solche Dachziegel als Ausschuß erkannt, auf einem Bildschirm des Rechners angezeigt und/oder durch eine von dem Rechner gesteuerte Betätigung einer Entnahmevorrichtung automatisch aus dem Arbeitsprozeß entfernt. Während der Klangmessung liegen die Dachziegel auf einem Förderband auf, welches eine Meßkammer durchläuft, in welcher das mechanische Anschlagen der Dachziegel erfolgt und die auch das Mikrofon zur Aufnahme des Klangspektrums enthält.

Bei diesem bekannten Verfahren ist es schwer, ein eindeutiges Bewertungskriterium festzulegen, nach dem einwandfreie Produkte auch dann als gut erkannt werden können, wenn ihr Klangspektrum nicht exakt mit dem als Qualitätsreferenz gespeicherten Klangmuster übereinstimmt. Eine Abweichung des Klangspektrums eines zu prüfenden Dachziegels von einem Klangmuster oder einem durch mehrere Klangmuster vorgegebenen Bereich ist aber aufgrund von Material- und Herstellungsabweichungen auch bei einwandfreien Dachziegeln selten vermeidbar. Auch eine unterschiedliche Auflageposition der zu prüfenden Dachziegel auf dem Förderband während der Klangmessung kann zu Abweichungen des Klangspektrums führen, welche bei dem Vergleich mit dem vorgegebenen Klangmuster einen Ausschuß-Dachziegel vortäuschen, ohne daß dies zutrifft. Auch können mit Fehlern behaftete Dachziegel hierdurch ein Klangspektrum erhalten, das von dem als Vergleichsbasis dienenden Klangmuster nur unwesentlich abweicht und daher ein positives Prüfergebnis liefert.

Ein ähnliches Meßverfahren ist aus der WO-A 91/10 131 bekannt. Darin wird ein keramisches Bauteil angeschlagen und das Frequenzspektrum des abgestrahlten Klangs mit einem Referenz-Frequenzspektrum eines einwandfreien Bauteils daraufhin überprüft, ob charakteristische Peaks vorhanden sind und bezüglich ihrer Frequenzlage mit dem Referenz-Frequenzspektrum übereinstimmen. Ist das nicht der Fall, so wird das Bauteil als fehlerhaft erkannt. Auch mit diesem Verfahren besteht jedoch die Gefahr, daß einwandfreie Bauteile als fehlerhaft erkannt werden, deren charakteristische Klangfrequenzen aufgrund von Änderungen bezüglich der Wanddicke oder des Materials verschoben sind.

Weiterhin ist ein Fehlerermittlungs-Verfahren bekannt, bei dem eine Frequenzanalyse mit einem Komparator ausgeführt wird (EP-A 56 772). Eine Meßschaltung führt eine Frequenzanalyse mit einem Komparator aus, die im Verlauf eines Meßvorgangs mehrfach während des Abklingens des Schallsignals erfolgt. Durch einen Rechner werden anhand der erhaltenen Signale eine Bestimmung der Mittelfrequenz eines Resonanzpeaks sowie eine Ermittlung der Bandbreite des Resonanzpeaks ausgeführt. Die so erzielten Werte dienen als Grundlage für eine Bauteilbewertung dahingehend, daß ein Bauteil als defekt angesehen wird, wenn die Differenz zwischen einer vorgegebenen Soll-Resonanzfrequenz und der berechneten Mittelfrequenz kleiner als Null ist oder wenn die Bandbreite des Resonanzpeaks größer als eine vorgegebene Bandbreite ist.

Aufgabe der Erfindung ist es, ein Verfahren und eine Einrichtung der eingangs genannten Art zu schaffen, das eine schärfere Trennung zwischen einwandfreien und schlechten Produkten erlaubt und darüber hinaus die Möglichkeit eröffnet, die als einwandfrei befundenen Produkte bezüglich ihrer Qualität zu klassifizieren oder zu sortieren.

Verfahrensmässig wird diese Aufgabe gelöst durch das im Anspruch 1 definierte Verfahren.

Das erfindungsgemässe Verfahren beruht auf der Erkenntnis, daß einwandfreie Produkte, die keine Fehlstellen, Sprünge/Risse od.dgl. aufweisen, ein Klangspektrum mit verhältnismässig deutlich ausgeprägten Grund- und Oberschwingungen haben, gegenüber denen das ein blosses Geräusch erzeugende Rauschen in der Amplitude merklich zurücktritt. Umgekehrt nimmt aufgrund zusätzlicher oder anderer Eigenschwingungsformen der Produkte, die durch Fehlstellen entstehen, das Rauschen im Klangspektrum an Intensität im Vergleich zu den - u.U. zusätzlich nur geringer ausgeprägten - charakteristischen Grund- und Oberschwingungen des Produkts zu. Dies hört der Prüfer bei der konventionellen Klangprüfung als "klirrendes" Geräusch. Die Summe aller in einem analysierten Frequenzbereich des Klangspektrums auftretenden Amplitudenpeaks bezogen auf die in demselben Frequenzbereich feststellbaren Wendepunkte der über der Frequenz aufgetragenen Amplitudenkurve ergibt daher eine Bewertungszahl, die weitgehend unabhängig ist von der exakten Lage der die Grund- und Oberschwingungen kennzeichnenden Peaks auf der Frequenzskala. Somit können auch solche Produkte, z.B. Dachziegel, als einwandfrei erkannt werden, die keine Fehler aufweisen, jedoch aufgrund von Dickenschwankungen, Materialabweichungen und/oder grösserer Härte aufgrund höherer Brenntemperatur bezüglich ihrer Frequenz geänderte Grund- und Oberschwingungen im Klangspektrum aufweisen. Andererseits lassen sich auch Produkte mit derart verschobenen Grund- und Oberschwingungen als Ausschuß erkennen, wenn sie Fehler aufweisen, weil das durch die Fehler bedingte Klirrgeräusch oder Rauschen einen höheren Anteil an der Schallintensität hat, d.h. mit grösserer Amplitude im Klangspektrum vorhanden ist. Aus der Art des geschilderten Bewertungskriteriums ergibt sich, daß die Qualität der Produkte umso besser ist, je höher die Bewertungszahl ist.

Es versteht sich, daß die Klanganalyse, z.B. mit einem gesonderten Signalprozessor, und die Ermittlung der Bewertungszahl nach der Übernahme des Klangspektrums eines zu prüfenden Produkts in dem Rechner der Prüfeinrichtung erfolgt, so daß das Prüfergebnis praktisch gleichzeitig mit der Aufnahme des Klangspektrums des angeschlagenen Produkts vorliegt. Daher ist es möglich, das Prüfverfahren im laufenden Herstellungsprozeß von Produkten auszuführen und als Ausschuß erkannte Produkte direkt nach erfolgter Prüfung durch eine von dem Rechner gesteuerte Einrichtung auszuscheiden.

Die eine gute Bauteilqualität repräsentierende Bezugs-Bewertungszahl wird anhand eines bekannt guten Produkts ermittelt. Die Kenntnis darüber, ob das Bezugsprodukt gut ist, kann entweder durch die eingangs geschilderte manuelle Klangprüfung erfolgen oder anhand einer Beurteilung des Amplituden-Frequenz-Bildes dahingehend, ob und in welchem Maße die charakteristischen Grund- und Oberschwingungen des Produkts gegenüber dem Rauschen ausgeprägt sind. Anhand von Produkten, die bekanntermassen mehr oder weniger fehlerbehaftet sind, lässt sich darüber hinaus ein Toleranzbereich für eine Gut-Beurteilung festlegen, innerhalb dessen trotz vorhandener Fehler im Produkt gut reproduzierbare Qualitätsstufen bestimmt werden können.

Neben der Gestalt und dem Material eines Bauteils werden dessen Eigenfrequenzen und Eigenschwingungsformen, welche das bauteiltypische Klangspektrum ergeben, durch die Auflagerung des Bauteils bestimmt. Für einen reproduzierbaren Vergleich der Bewertungszahl eines zu prüfenden Bauteils mit der Bezugs-Bewertungszahl ist es daher erforderlich, die Auflagerbedingungen des zu prüfenden Bauteils möglichst weitgehend denjenigen anzunähern, die bei der Festlegung der Bezugs-Bewertungszahl an dem Bezugs-Bauteil bestanden haben. Es hat sich gezeigt, daß der Einfluß abweichender Auflagerbedingungen auf die Eigenfrequenzen und Eigenschwingungsformen eines Bauteils umso deutlicher sich im Prüfergebnis (und damit in einer mangelhaften Reproduzierbarkeit) niederschlägt, je flächiger die Unterstützung des Bauteils beim Meßvorgang ist. Aus diesem Grund wird nach einer besonders vorteilhaften Weiterbildung der Erfindung das Verfahren an einem Bauteil ausgeführt, das zumindest während des Anschlagens und der Frequenzanalyse weich elastisch aufgelagert ist. Ziel hierbei ist es, das Bauteil so zu lagern, daß es im Schwingungszustand als unterstützungsfrei schwingend betrachtet werden kann, so daß eine Änderung der Auflageposition auf Eigenfrequenz und Eigenschwingungsformen keine oder nur geringe Auswirkungen hat. Diese Lagerbedingung lässt sich vor allem dann erreichen, wenn das Produkt auf nur wenigen Auflagepunkten gelagert ist. Bei einem flächigen Bauteil, wie z.B. einem Dachziegel, ist die Mindestanzahl der Auflagerpunkte drei. Zweckmässigerweise sollte die Anzahl der Auflagerpunkte nicht wesentlich über diese Mindestanzahl hinausgehen.

Bereits bei den vorstehend geschilderten bekannten Verfahren hat sich gezeigt, daß für eine reproduzierbare Beurteilung des Klangspektrums das mechanische Anschlagen der Bauteile im wesentlichen an der gleichen Stelle erfolgen muß. Denn durch Abweichungen der Anschlagstelle werden u.U. Eigenschwingungsformen stärker oder weniger stark angeregt, so daß dadurch eine Veränderung des Klangspektrums die Folge sein kann. Grundsätzlich gilt auch für das erfindungsgemässe Verfahren, daß zweckmässigerweise die Stelle, an der das Bauteil mechanisch zur Klangabstrahlung angeregt wird, bei gleich gestalteten Bauteilen gleich gewählt ist. Jedoch hat sich auch hier gezeigt, daß bei der geschilderten weich-elastischen und punktweisen Auflagerung des Bauteils ein geringerer nachteiliger Einfluß auf die Reproduzierbarkeit der Klangmessung als bei den bekannten Meßverfahren zu erwarten ist.

Nach einer vorteilhaften Ausgestaltung des erfindungsgemässen Verfahrens ist vorgesehen, daß für die Aufnahme des Klangspektrums ein Schwellenwert der Lautstärke festgelegt und nur der den Schwellenwert übersteigende Teil des Klangspektrums aufgenommen und analysiert wird. Hierdurch werden Geräuscheinflüsse relativ geringer Lautstärke, die durch Umgebungsgeräusche Echobildung, Interferenzen oder andere Störungen entstehen und sich im Klangspektrum ebenfalls als ein Rauschen zeigen, ausgeschaltet.

Es versteht sich, daß für Bauteile unterschiedlicher Art und Ausbildung unterschiedliche Bewertungszahlen zu gelten haben. Daher ist es zweckmässig, das von einem Bauteil abgegebene Klangspektrum zwar über einen verhältnismässig grossen Frequenzbereich (z.B. von 0 bis 20.000 Hz) zu analysieren, jedoch aus dem Amplituden-Frequenz-Bild ein Frequenzfenster auszuwählen, in welchem die den Klang im wesentlichen bestimmenden charakteristischen Grund- und Oberschwingungen des Bauteils liegen. Nur anhand der in diesem Frequenzfenster liegenden Peaks wird die Bewertungszahl ermittelt.

Einrichtungsmässig wird die vorstehend genannte Aufgabe gelöst durch die Ausgestaltung einer Prüfeinrichtung gemäß dem Anspruch 12.

Wie vorstehend bereits erläutert, kommt es für die reproduzierbare Klangmessung an Bauteilen darauf an, daß die Bauteile im wesentlichen bei gleichbleibenden Lagerbedingungen überprüft werden, um einen sinnvollen Vergleich mit der Bezugs-Bewertungszahl zu erlauben. Infolge der bei der erfindungsgemässen Prüfeinrichtung vorgesehenen Lagervorrichtung, die mit weich-elastisch nachgiebigen das Bauteil unterstützenden Lagerelementen ausgestattet ist, lässt sich eine Auflagerung des Bauteils erreichen, die Eigenschwingungen nach der mechanischen Anregung entsprechend einem praktisch nicht aufgelagerten Zustand zulässt. Dadurch spielen unvermeidbare Abweichungen der Auflagerposition der einzelnen Bauteile, die nacheinander der Qualitätsprüfung unterzogen werden, nur eine unwesentliche Rolle für die Meßgenauigkeit.

Der durch die Auflagerung ausgeübte Einfluß auf die Meßgenauigkeit lässt sich noch weiter verringern, wenn nach einer weiteren vorteilhaften Ausgestaltung die Anzahl der Lagerelemente gering ist und in der Nähe der für die statische Unterstützung des Bauteils notwendigen Mindestanzahl von Lagerelementen liegt. So weist die Lagervorrichtung zur Auflagerung beispielsweise eines Dachziegels oder eines sonstigen plattenförmigen Gebildes drei oder vier Lagerelemente auf.

Die punktförmige, d.h. möglichst kleinflächige Auflagerung des Bauteils durch die Lagerelemente unterstützt weiterhin die weitgehende Unabhängigkeit des Meßergebnisses von unterschiedlichen Lagerungspositionen der Bauteile. Nach einer zweckmässigen Ausgestaltung sind die Lagerelemente Auflagerstifte mit an ihrem oberen Ende angeordneten gummielastischen Köpfen. Um die genannte weich-elastische Auflagerung zu bewirken, sollte das elastomere Material dieser gummielastischen Köpfe eine Shore-A-Härte von nicht mehr als 80 Shore-A, vorzugsweise 30 bis 60 Shore-A haben.

Die Lagervorrichtung der Prüfeinrichtung kann je nach der Art der Eingliederung der Prüfeinrichtung in den Herstellungs- oder Transportprozeß der Bauteile unterschiedlich sein. In einer ersten Ausführungsform kann die Lagervorrichtung stationär in einer Meßkammer angeordnet sein. In diesem Fall ist eine Greif- und Ablegevorrichtung erforderlich, welche kontinuierlich, taktweise oder chargenweise angelieferte Bauteile ergreift und auf die elastischen Lagerelemente der Lagervorrichtung auflegt und davon nach vollzogenem Prüfvorgang wieder entnimmt. Bei dieser Ausführungsform kann die Prüfeinrichtung beispielsweise seitlich neben der Fördereinrichtung für die Bauteile angeordnet sein, wobei die genannte Greif- und Ablegevorrichtung zwischen der Fördereinrichtung und der Prüfeinrichtung angeordnet ist, um die Bauteile nach vollzogener Prüfung an richtiger Stelle auf die Fördereinrichtung wieder zurückzubringen.

Nach einer zweiten Ausführungform kann die Fördereinrichtung für die Bauteile eine der Anzahl von Bauteilplätzen auf der Fördereinrichtung entsprechende Anzahl von Lagervorrichtungen tragen. In diesem Fall werden die Bauteile direkt anschließend an den Herstellungsprozeß, beispielsweise im Fall von Keramikteilen nach dem Brennofen, nach der Abkühlung unmittelbar auf die Lagervorrichtungen gelegt. Die Fördereinrichtung muß dann die Prüfposition durchlaufen, in der das mechanische Anschlagen sowie die Aufnahme des Klangspektrums ausgeführt wird.

In einer dritten Ausführungsform kann die Fördereinrichtung für die Bauteile so ausgestaltet sein, daß diese mit ihren Seitenrändern oder Enden auf je einem Fördertrum einer aus zwei zueinander parallelen Fördertrumen bestehenden Fördereinrichtung aufliegen. Zwischen den Fördertrumen ist die Lagervorrichtung heb- und senkbar angeordnet. Bei taktweiser Förderung der Bauteile wird entsprechend im Takt die Lagervorrichtung angehoben, so daß ein darüber befindliches Bauteil durch die Lagerelemente von den Fördertrumen abgehoben wird. Die Lagervorrichtung befindet sich dabei im Bereich und unterhalb der Prüfposition, z.B. einer Meßkammer, so daß durch den Hubvorgang der Lagervorrichtung das Bauteil in die Meßkammer zur Durchführung des Prüfvorganges hineinbefördert wird. Nach vollzogener Prüfung senkt sich die Lagervorrichtung wieder zwischen den beiden Fördertrumen hindurch ab, so daß dadurch die Seitenränder oder Enden des Bauteils darauf zur Auflage kommen und beim nächsten Takt der Fördereinrichtung weiterbefördert werden können.

Um trotz der relativen Unempfindlichkeit der erfindungsgemässen Prüfeinrichtung gegenüber Änderungen der Auflagerungsposition der Bauteile eine im wesentlichen gleichbleibende Auflagerung zu erreichen, kann daran gedacht sein, der Prüfposition, z.B. einer Meßkammer eine Vorrichtung zur Lagekontrolle und ggf. zur Lagekorrektur der Bauteile vorzuschalten. Einrichtungen zur Lagekontrolle der Bauteile können unterschiedlichster Art und Ausbildung sein. Beispielsweise ist eine Lagekontrolle mit Hilfe optoelektronischer Mittel möglich. Eine einfache elektromechanische Lösung besteht darin, daß die Bauteile während ihrer Förderung unter Schlepprollen hindurchlaufen, die beim Durchlauf durch das Bauteil angehoben werden. Das Anheben der Schlepprollen kann elektrisch oder elektronisch abgetastet und aufgezeichnet werden, so daß ein Vergleich des so gewonnenen Hubprofils mit einem als lagerichtig vorgegebenen Bezugs-Hubprofil die Feststellung einer korrekten bzw. inkorrekten Lage des Bauteils ermöglicht.

Bei der vorstehend geschilderten dritten Ausführungsform ist eine besonders einfache mechanische Vorrichtung zur korrekten Positionierung der Bauteile bezüglich der Lagervorrichtung realisierbar. Diese besteht darin, daß an der Lagervorrichtung schräg angeordnete und mit der Lagervorrichtung zusammen bewegbare Führungswände trichterförmig angeordnet sind, die beim Hubvorgang mit einem Teil der Außenkontur des Bauteils in Kontakt gelangen, wenn dieses nicht richtig in Bezug auf die Lagervorrichtung auf der Fördereinrichtung liegt. Mit zunehmender Hubhöhe richten diese Führungswände das Bauteil in Bezug auf die Lagervorrichtung aus, wobei das Bauteil durch die Führungswände auf der Fördereinrichtung verschoben wird.

Während bei der vorstehend geschilderten ersten Ausführungsform mit stationär in einer Meßkammer angeordneter Lagervorrichtung das Bauteil während des Meßvorganges zwangsläufig in Ruhe ist, muß bei den beiden anderen Ausführungsformen dafür gesorgt sein, daß die die Meßkammer durchlaufende Fördereinrichtung bzw. die heb- und senkbare Lagervorrichtung während des Prüfvorganges in Ruhe ist. Dies ist im Rahmen einer taktweisen Bewegung der Fördereinrichtung möglich, weil das erfindungsgemässe Prüfverfahren innerhalb sehr kurzer Zeit (Zeitdauer etwa 1 Sekunde) abläuft, so daß herkömmliche Taktzeiten eingehalten werden können. Jedoch ist die Durchführung des erfindungsgemässen Prüfverfahrens auch bei kontinuierlicher Förderung des zu prüfenden Bauteils möglich. Hierbei ist lediglich zu sorgen, daß sich während des Prüfvorganges die Lagerbedingungen des Bauteils entsprechend den vorstehend geschilderten Kriterien nicht ändern und daß zwischen dem Schlagelement und dem Bauteil beim Anschlagen keine ins Gewicht fallende Relativbewegung auftritt. Eine solche Relativbewegung könnte ein Schleifgeräusch erzeugen, welches das Klangspektrum beeinträchtigen kann. Eine Relativbewegung zwischen Bauteil und Schlagelement kann dadurch vermieden werden, daß die Schlagbewegung zumindest eine merkliche Komponente in Richtung der Förderbewegung des Bauteils hat, was sich z.B. bei einer in Bezug auf die Förderrichtung schräg gerichteten Schlagbewegung erzielen lässt.

Weitere Vorteile und Merkmale der Erfindung ergeben sich aus der nachfolgenden Beschreibung des erfindungsgemässen Verfahrens sowie von Ausführungsbeispielen der Einrichtung anhand der beiliegenden Zeichnungen, die jedoch die beanspruchte Anflagerung im Bereich von Schwingungsknotenlinien nicht zeigen. In den Zeichnungen zeigen:
Fig. 1 schematisch die Anordnung der die Prüfeinrichtung bildenden Komponenten;
Fig. 2 eine Stirnansicht der Lagervorrichtung mit direkt angebautem Schlagelement und einem Falz-Dachziegel als aufgelagertem Bauteil;
Fig. 3 eine Draufsicht auf die Lagervorrichtung gemäß Fig. 2 ohne den Falz-Dachziegel;
Fig. 4 analysierte Klangspektren von als gut befundenen Falz-Dachziegeln;
Fig. 5 zu Fig. 4 analoge Klangspektren von als schlecht befundenen Falz-Dachziegeln;
Fig. 6a bis 6c in Form von Höhenlinien gezeichnete Eigenschwingungsformen eines Falz-Dachziegels;
Fig. 7 eine schematische Seitenansicht einer Förderanlage für Dachziegel, der eine erfindungsgemässe Prüfanlage zugeordnet ist;
Fig. 8, 9 Stirnansicht bzw. Seitenansicht in vergrössertem Maßstab der Prüf-Paletten zur Lagerung und Förderung der zu prüfenden Dachziegel, und
Fig. 10 eine schematische Schnittdarstellung einer weiteren Ausführungsform einer Meßkammer.

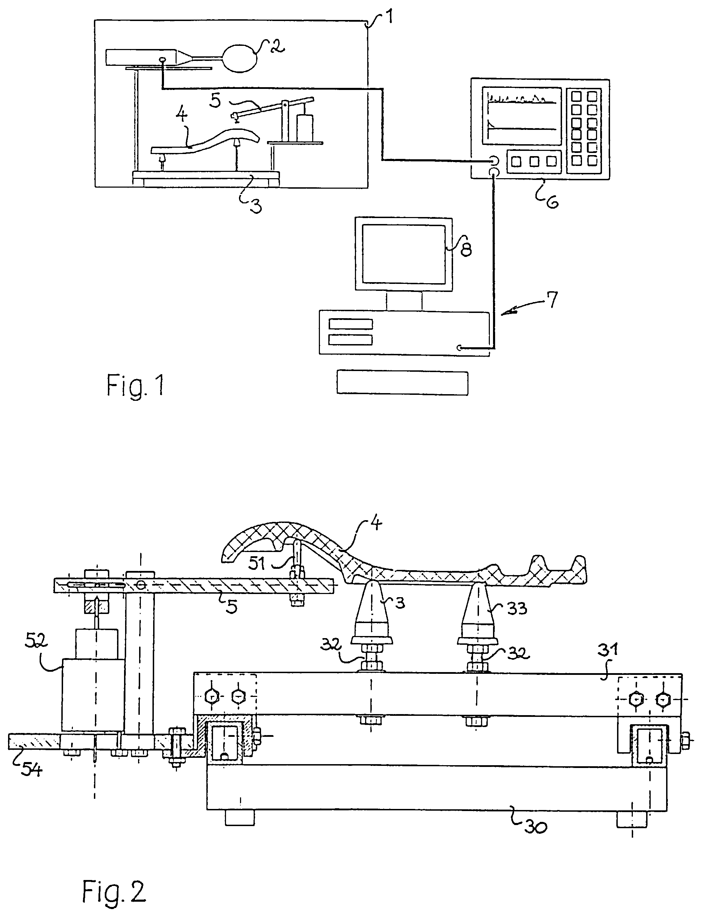

Die in Fig. 1 gezeigte schematische Anordnung einer erfindungsgemässen Prüfeinrichtung entspricht der vorstehend geschilderten ersten Ausführungsform, bei der die Lagervorrichtung für das zu prüfende Bauteil in der Meßkammer angeordnet ist.

Gemäß Fig. 1 weist diese Ausführungsform eine Meßkammer 1 auf, in der, bezüglich seiner Position innerhalb der Meßkammer einstellbar, ein Mikrofon 2, eine stationär angeordnete Lagervorrichtung 3 zur Auflagerung eines Bauteils 4 sowie ein Schlagelement 5 mit Betätigungseinrichtung untergebracht sind. Das Mikrofon 2 steht über entsprechende Leitungen mit einem Signalanalysator 6 in Verbindung, der das Klangspektrum des Bauteils 4 in einer Spektral-Ebenendarstellung (Amplituden-Frequenz-Spektrum) analysiert und auf einem Bildschirm wiedergibt. Der Signalanalysator 6 steht mit einem Rechner 7 in Verbindung, durch den das Amplituden-Frequenz-Spektrum entsprechend dem erfindungsgemässen Verfahren ausgewertet und an dem Bildschirm 8 angezeigt wird.

Die in Fig. 1 nur schematisch angedeutete Meßkammer 1 ist als Schallschutzkammer ausgebildet, d.h. so gestaltet, daß eine Schallabstrahlung nach außen nicht oder nur sehr gedämpft stattfinden kann. Darüber hinaus sind die Innenwandflächen der Meßkammer 1 schallschluckend ausgebildet, um Echoeffekte und akustische Interferenzen möglichst zu vermeiden. Maßnahmen dieser Art sind einschlägig bekannt und bedürfen an dieser Stelle deshalb keiner näheren Erläuterung. Die Meßkammer 1 muß weiterhin mindestens eine Eintrittsöffnung aufweisen, um das Ein- und Ausbringen der Bauteile 4 zu ermöglichen. Wenn, wie dies vorstehend bereits beschrieben wurde, die Bauteile die Meßkammer durchlaufen, so muß neben einer Eintrittsöffnung auch eine Austrittsöffnung vorhanden sein. Es ist von Vorteil, sowohl auf der Eintrittsseite als auch auf der Austrittsseite die dort vorgesehenen Öffnungen mit Schallschutzschleusen zu versehen, um auch im Bereich der Öffnungen eine Schalldämmung nach außen hin zu bewirken.

Das Mikrofon 2 ist innerhalb der Meßkammer 1 einstellbar angeordnet, um eine zur Aufnahme des Klangspektrums optimale Lage des Mikrofons 2 wählen zu können. Für die Prüfung von Bauteilen 4 gleichbleibender Gestaltung ist es von Bedeutung, die einmal gewählte Lage des Mikrofons 2 beizubehalten, weil trotz der erwähnten schallschluckenden Ausbildung der Meßkammer-Innenwände Änderungen des Klangspektrums durch eine geänderte Lage des Mikrofons 2 nicht ausgeschlossen werden können. Dies gilt vor allem, wenn die Aufnahmecharakteristik des Mikrofons 2 keine Kugelcharakteristik ist, sondern eine ausgeprägte Ausrichtung hat.

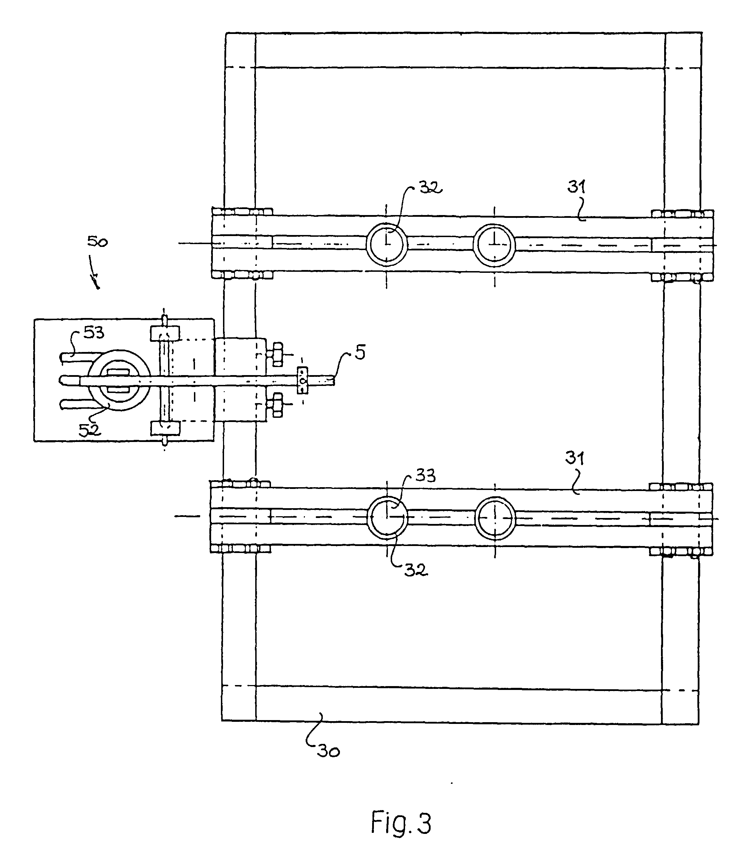

Die Gestaltung der Lagervorrichtung 3 und des Schlagelements 5 ist deutlicher aus den Fig. 2 und 3 entnehmbar. In dem gezeigten Ausführungsbeispiel besteht die Lagervorrichtung 3 im wesentlichen aus einem rechteckigen Stützrahmen 30 aus Rechteck-Hohlprofilen, auf dessen gegenüberliegenden längeren Profilstäben zwei Lagerbrücken 31 längsverschiebbar und durch Schrauben festklemmbar angeordnet sind. Die beiden Lagerbrücken 31 tragen je zwei Lagerstifte 32, die längs den Lagerbrücken 31 verschiebbar und ebenfalls durch Schrauben an einer beliebigen Position festklemmbar sind. Die Lagerstifte 32 weisen ein Gewinde auf und tragen an ihrem oberen Ende höhenverstellbar aus einem relativ weichen elastomeren Material bestehende Köpfe 33, die sich nach oben hin konisch verjüngen und dadurch eine relativ kleinflächige Auflagerfläche bilden. Sie erleichtern dadurch auch eine eindeutige, reproduzierbare Positionierung. Auf den Köpfen 33 ist als Bauteil 4 ein Dach-Falzziegel aufgelagert.

Zwischen den beiden Lagerbrücken 31 ist an dem einen Längsstab des Stützrahmens 30 eine Schlagvorrichtung 50 längsverschiebbar und an einer beliebigen Stelle festklemmbar angeordnet, welche als Schlagelement 5 einen Klöppel mit einer Klöppelfinne 51 aus einem hartelastischen Kunststoffmaterial sowie eine Betätigungsvorrichtung 52 in Gestalt eines elektrisch betätigten Zugmagneten umfasst. Wie aus Fig. 2 hervorgeht, ist der Klöppel 5 als zweiarmiger Hebel ausgebildet; die Zugstange des Zugmagneten 52 ist mit dem Klöppel 5 über ein Langloch verbunden. Die Klöppelfinne 51 ist auf dem Klöppel 5 verstellbar angeordnet. Zur Steuerung der Anschlagkraft und der Anschlaggeschwindigkeit kann der Zugmagnet 52 variabel elektrisch angesteuert oder in Langlöchern 53 der Grundplatte 54 verstellt werden. Anstelle eines Zugmagneten kann auch ein Pneumatikzylinder eingesetzt werden.

Es versteht sich, daß die vorstehend geschilderten Verstellmöglichkeiten der Komponenten an der Lagervorrichtung 3 nur für den Fall erforderlich sind, daß Gestalt und/oder Grösse der zu prüfenden Bauteile variabel sind und insoweit die Meßvorrichtung angepasst werden muß. Trifft das nicht zu, d.h., ist die Prüfeinrichtung zur Prüfung stets gleichbleibend gestalteter Bauteile bestimmt, so werden verstellbare Komponenten nicht benötigt und der Stützrahmen 30 kann als eine dem jeweiligen Bauteil angepasste Prüfpalette ausgebildet sein. Diese weist insbesondere fest angeordnete Lagerpunkte zur Aufnahme des Bauteils auf.

Das Prüfverfahren läuft unter Anwendung der geschilderten Prüfeinrichtung folgendermassen ab:

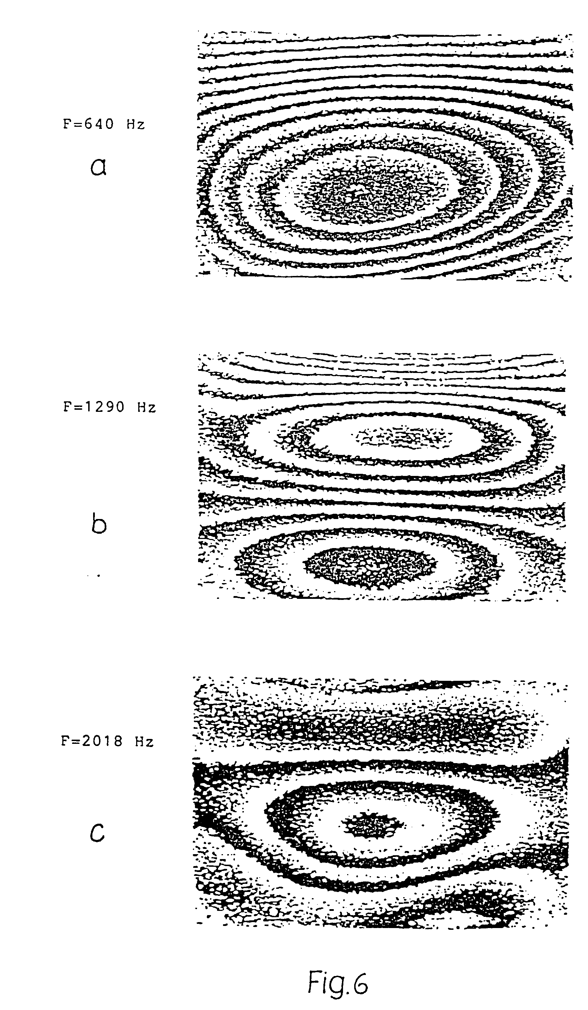

Zunächst wird das Bauteil 4, im gezeigten Ausführungsbeispiel der Falz-Dachziegel, auf den gummielastischen Köpfen 33 der Lagerstifte 32 so aufgelegt, daß unter Berücksichtigung der zu erwartenden Eigenschwingungsformen der tiefsten Grund- und Oberschwingungen des Falz-Dachziegels eine möglichst geringe Beeinflussung der Schwingung durch die Lagerung zu erwarten ist. Wie aus den Fig. 6a bis 6c hervorgeht, zeigt die Eigenschwingungsform des Falz-Dachziegels bei etwa 640 Hz einen annähernd mittigen Schwingungsbauch, bei etwa 1.290 Hz zwei nebeneinander liegende langgestreckte Schwingungsbäuche und bei 2.018 Hz einen mittigen und zwei randseitige Schwingungsbäuche. Eine möglichst geringe Beeinflussung der Schwingung durch die Auflagerkräfte ist daher zu erwarten, wenn - wie in Fig. 2 und 3 gezeigt - die vier gummielastischen Köpfe 33 etwa mittig bezüglich der Quererstreckung des Falz-Dachziegels angeordnet sind. In dieser Lage ist der Dachziegel 4 statisch hinreichend unterstützt.

Die Klöppelfinne 51 schlägt den Dachziegel 4 im Bereich von dessen Deckfalz von unten her an. Der Anschlagpunkt ist ebenfalls mit Rücksicht auf die zu erwartenden Eigenschwingungsformen ausgewählt und lässt im Hinblick darauf eine bezüglich der Auflagerung relativ starke Anregung erwarten. Das Anschlagen erfolgt durch Ansteuerung des Zugmagneten 52, wodurch die Klöppelfinne 51 einen kurzen kräftigen Schlag ausführt. Durch sofortige Rückstellung des Zugmagneten 52 wird ein längerdauernder Kontakt der Klöppelfinne 51 mit dem Dachziegel 4, der zur Klangdämpfung führen würde, verhindert.

Infolge des weich-elastischen Materials der Köpfe 33 (die Shore-Härte des Materials beträgt etwa 30 Shore-A), der kleinflächigen bzw. punktförmigen Abstützung des Dachziegels 4 durch die Köpfe 33 und durch die geringe Anzahl der Auflagerpunkte schwingt der Dachziegel 4 nach dem Anschlagen bei Eigenfrequenzen und mit Eigenschwingungsformen, die praktisch denjenigen des frei schwebenden Dachziegels ohne jegliche Auflagerung gleichkommen. Aus diesem Grund ist das durch Anschlagen entstehende Klangspektrum des Dachziegels verhältnismässig wenig durch Änderungen der Auflagerpunkte, d.h. durch wechselnde Auflagerpositionen, beeinflussbar und mithin die Prüfeinrichtung gegenüber einer nicht exakten Einhaltung der Auflagerpositionen nacheinander geprüfter Bauteile relativ unempfindlich.

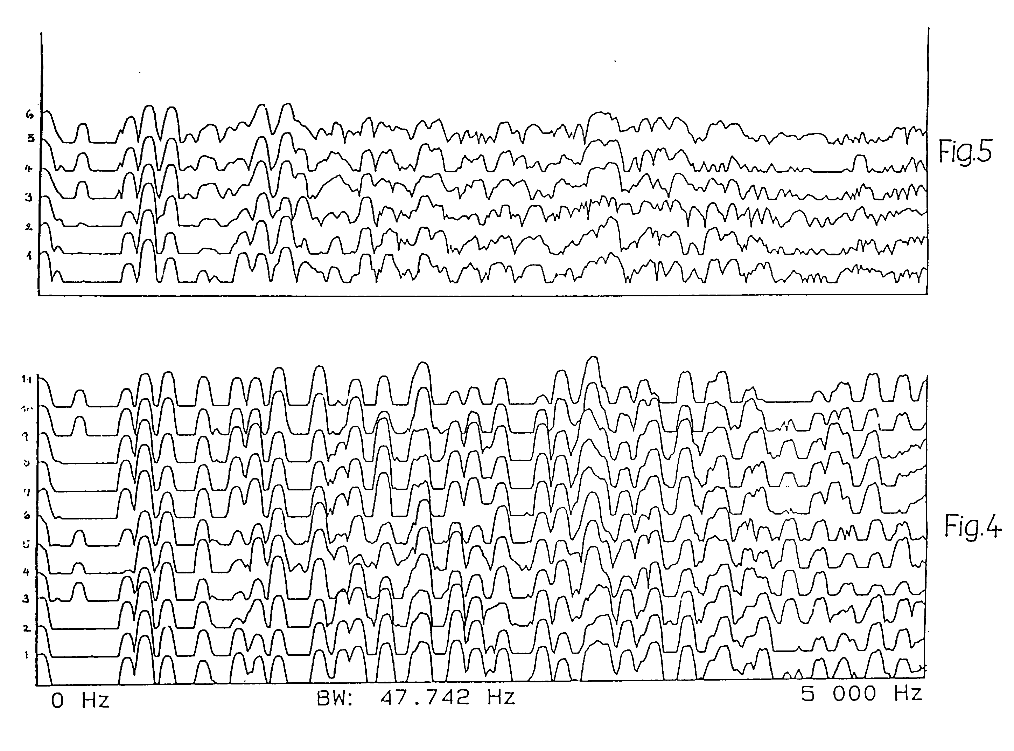

Die Fig. 4 zeigt die durch den Signalanalysator 6 analysierten und dargestellten Amplituden-Frequenzspektren von zwei Dachziegeln, die fehlerfrei und damit als qualitativ gut zu betrachten sind. Das Klangspektrum dieser Ziegel ist über einen Frequenzbereich von 47.742 Hz analysiert worden; zur Begutachtung ist nur ein Frequenzfenster von 0 bis 5.000 Hz herangezogen worden. Die Kurven 1 bis 3 zeigen aufeinanderfolgende Messungen des einen Dachziegels, wobei das Anschlagen in der Mitte des Dachziegels erfolgt ist. Die Kurven 4 bis 6 geben Meßergebnisse wieder, bei denen derselbe Dachziegel am Deckfalz (gemäß dem Aufbau nach Fig. 2) angeschlagen wurde. Die Kurven 7 bis 9 zeigen das Meßergebnis des zweiten Dachziegels bei Anschlagen in dessen Mitte, während die Kurven 10 und 11 wiederum das Ergebnis desselben Dachziegels bei Anschlagen am Deckfalz wiedergeben.

Aus der Darstellung ist einerseits zu erkennen, daß eine Verlegung der Anschlagstelle von der Mitte zum Deckfalz hin das Bild des Klangspektrums kaum beeinflusst. Andererseits macht die Darstellung deutlich, daß bei den untersuchten, qualitativ guten Dachziegeln die Eigenfrequenzen über das ganze Frequenzfenster hinweg ziemlich deutlich ausgeprägt sind, wobei zwischen den Amplituden der Eigenfrequenzen praktisch kein Rauschen zu erkennen ist. Das liegt einerseits daran, daß fehlerfreie Dachziegel aus den eingangs genannten Gründen mit deutlich ausgeprägten Eigenfrequenzen und Eigenschwingungsformen schwingen, andererseits daran, daß durch akustische Steuerung des Mikrofons 2 so, daß das Klangspektrum erst über einem bestimmten Schwellenwert der Klangintensität aufgenommen wird, Störschwingungen niedriger Schallintensität nicht erscheinen.

Fig. 5 zeigt die Amplituden-Frequenzspektren eines fehlerbehafteten Dachziegels. Analog zu Fig. 4 geben die Kurven 1 bis 3 das Ergebnis dreier aufeinanderfolgender Meßvorgänge an demselben Dachziegel bei Anschlagen in dessen Mitte an, während die Kurven 4 bis 6 das Ergebnis dreier aufeinanderfolgender Meßvorgänge an demselben Dachziegel bei Anschlagen am Deckfalz zeigen. Das ausgewählte Frequenzfenster entspricht demjenigen der Fig. 4. Auch hier wird deutlich, daß eine Verlagerung der Anschlagstelle von der Mitte des Dachziegels zu dessen Deckfalz eine verhältnismässig geringe Auswirkung auf das Klangbild hat. Vor allem aber ist zu erkennen, daß neben einigen wenigen der niedrigen Eigenfrequenzen höher ausgeprägte Eigenfrequenzen nicht mehr erscheinen, sondern anstelle davon zusätzliche, einem klirrenden Geräusch - im Unterschied zu einem reinen Klang - entsprechende Frequenzen hinzukommen. Daraus resultiert eine entsprechende Zunahme der Wendepunkte des Kurvenverlaufes, d.h. derjenigen Punkte, an denen sich das Vorzeichen der Krümmung des Kurvenverlaufes jeweils ändert.

Diesen Sachverhalt macht sich das erfindungsgemässe Verfahren zunutze. Anhand des von dem Mikrofon 2 aufgenommenen und durch den Signalanalysator 6 im Wege einer Fast-Fourier-Analyse (FFA) analysierten Klangspektrums bestimmt der Rechner 7 die Amplituden des Kurvenverlaufes innerhalb eines vorbestimmten Frequenzfensters und summiert diese auf. Weiterhin wird durch den Rechner die Anzahl von Wendepunkten des Kurvenverlaufes in dem Frequenzfenster ermittelt und anschließend wird der Quotient zwischen der Amplitudensumme und der Anzahl dieser Wendepunkte errechnet. Dieser Quotient gilt als Bewertungszahl, die mit einer zuvor ermittelten Bezugs-Bewertungszahl an bekanntermassen guten Dachziegeln gleicher Gestaltung verglichen wird.

Die Amplitudenhöhe wird im vorlegenden Beispiel in Volt gemessen. Jedoch spielt die Meßeinheit dafür keine Rolle, weil es für die Qualitätsbeurteilung nur auf den Vergleich zwischen der Bewertungszahl eines zu prüfenden Dachziegels mit der Bezugs-Bewertungszahl ankommt, die in gleicher Weise ermittelt wurde. Die Meßeinheit für die Amplitude kann daher beliebig sein, sofern sie für alle Meßvorgänge beibehalten wird. Eine weitgehende Übereinstimmung der Bewertungszahl eines zu prüfenden Dachziegels mit der Bezugs-Bewertungszahl lässt sinngemäß auf eine gute Qualität schließen. Da sich gezeigt hat, daß mit zunehmender Anzahl und/oder Grösse der Fehlerstellen (Sprünge, Risse, Lunker und dgl.) die Anzahl der Wendepunkte in dem betrachteten Frequenzfenster zunimmt, ergibt das erfindungsgemässe Verfahren die Möglichkeit, eine Toleranzgrenze, d.h. eine von der Bezugs-Bewertungszahl abweichende geringere Bewertungszahl festzulegen, innerhalb der ein Bauteil mit Einschränkungen noch als gut betrachtet werden kann. Das erfindungsgemässe Verfahren lässt somit ein Sortieren oder ein Klassifizieren von noch als gut zu befindenden Bauteilen mit bestimmten Qualitätsstufen zu.

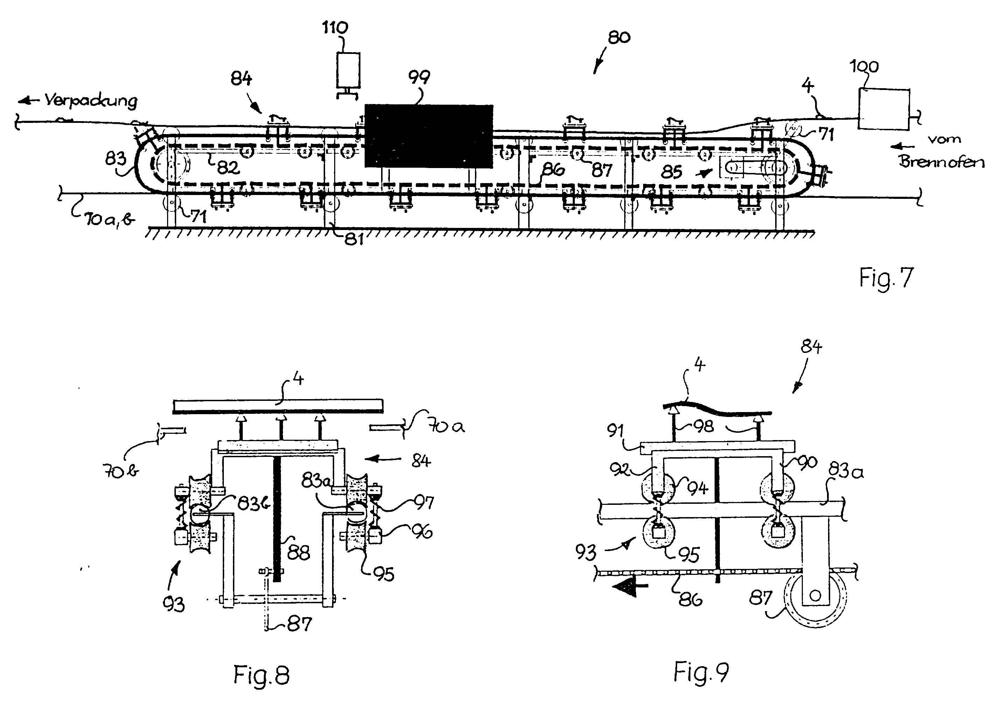

Die Fig. 7 bis 9 zeigen rein schematisch eine Fördereinrichtung zum Transport von zu prüfenden Bauteilen (entsprechend dem vorstehend geschilderten Ausführungsbeispiel auch hier von Falz-Dachziegeln nach deren Herstellung) und die konstruktive Anpassung einer erfindungsgemässen Prüfeinrichtung als Prüfanlage an diese Fördereinrichtung. Dies entspricht der eingangs erwähnten dritten Ausführungsform der Fördereinrichtung, bei der die Fördereinrichtung zwei zueinander parallel verlaufende Fördertrume aufweist und die Prüfeinrichtung zwischen diesen Fördertrumen angeordnet ist.

Die Fördereinrichtung weist zwei zueinander in einem bestimmten Abstand voneinander parallel geführte Förderbänder 70a, 70b auf, deren Antrieb nicht näher dargestellt ist. Beide Förderbänder 70a, 70b sind im Bereich der im Ganzen mit 80 bezeichneten Prüfanlage auf Stützrollen 71 geführt. Die Förderbänder 70a, 70b sind endlos, d.h. sie sind an ihren Enden umgelenkt.

Die Prüfanlage 80 umfasst ein ortsfestes Gestell, das aus einer Mehrzahl von Stützen 81 gebildet ist, die durch Längsstreben 82 miteinander verbunden sind. An den gegenüberliegenden Längsseiten des Gestells 81, 82 ist je eine endlose Führungsschiene 83a bzw. 83b fest angeordnet, auf denen eine Anzahl von Prüfpaletten 84 im Kreislauf geführt sind. Weiterhin ist in dem Gestell 81, 82 mittels eines Antriebes 85 eine endlos umlaufende Förderkette 86 angetrieben, die auf verzahnten Rollen 87 geführt ist. An der Förderkette 86 sind Mitnehmerarme 88 in gleichen Abständen befestigt, die mit den Prüfpaletten 84 fest verbunden sind.

Die Prüfpaletten 84 bestehen im wesentlichen aus einem Palettenrahmen 90, auf dem eine Prüfkassette 91 (ggf. auswechselbar) befestigt ist. An den vier Beinen 92 des Palettenrahmens 90 ist jeweils eine Führungsvorrichtung 93 angeordnet, die die Prüfpaletten 84 in gleichbleibender Lage bezüglich der Förderkette 86 führt und hält. Die Führungsvorrichtung 93 weist jeweils ein Paar von Führungsrollen 94, 95 auf, welche die zugeordnete Führungsschiene 83a bzw. 83b mit ihrem konkaven Führungsprofil von gegenüberliegenden Seiten her teilweise umgreifen (Fig. 8). Das konkave Führungsprofil der Führungsrollen 94, 95 ist an den - in dem Ausführungsbeispiel kreisförmigen - Querschnitt der Führungsschienen 83a, 83b bezüglich seiner Form angepasst.

Die bezüglich der Förderkette jeweils an der Außenseite der Führungsschiene 83a bzw. 83b laufende Führungsrolle 94 ist an dem entsprechenden Bein 92 unverschiebbar, jedoch drehbar gelagert, während die zugeordnete, an der Innenseite der Führungsschiene 83a bzw. 83b laufende Führungsrolle 95 über eine Halterung 96 mit variablem Achsabstand zu der Führungsrolle 94 gehalten und drehbar gelagert ist. Die Halterung 96 weist eine vorgespannte Zugfeder 97 auf, durch welche die Führungsrolle 95 stets in Anlage an der Innenseite der Führungsschiene 83a bzw. 83b gehalten ist.

Die Prüfkassette 91 trägt drei nur schematisch angedeutete Lagerköpfe 98 zur prüfgerechten Lagerung eines Bauteils, das in dem vorliegenden Ausführungsbeispiel ein Falz-Dachziegel 4 ist.

Im Längsverlauf des Gestells 81, 82 ist eine Meßkammer 99 angeordnet, durch die hindurch sich die Förderbänder 70a, 70b, die Führungsschienen 83a, 83b und die Förderkette 86 erstrecken.

Es versteht sich, daß die Lagerköpfe 98 zur Auflagerung der Falz-Dachziegel 4 nach Gestaltung und Material den Forderungen entsprechen, die in dem vorstehend geschilderten Ausführungsbeispiel der Meßeinrichtung beschrieben sind. Analog hierzu ist die Meßkammer 99 entsprechend der Meßkammer 1 gestaltet und ausgerüstet, ohne daß dies näher gezeigt ist.

Die Wirkungsweise der Prüfanlage 80 ist folgende:
Die Förderbänder 70a, 70b sind einem nicht gezeigten Brennofen zugeordnet, in welchem die Falz-Dachziegel 4 gebrannt werden. Nach dem Verlassen des Brennofens und anschließender Abkühlung werden die Falz-Dachziegel 4 durch nicht gezeigte Greifer so auf die Förderbänder 70a, 70b aufgelegt, daß sie sich mit ihren gegenüberliegenden Randbereichen darauf abstützen, mit ihrem Mittelfeld der jedoch weitgehend frei liegen (Fig. 8). Im Verlauf der Förderung durchlaufen die Falz-Dachziegel 4 eine Ausrichtvorrichtung 100, in der durch nicht gezeigte Richtkeile od.dgl. die Lage der Falz-Dachziegel 4 ggf. korrigiert wird. Die Förderkette 86 der Prüfanlage 80 ist mit einer Geschwindigkeit angetrieben, die mit der Fördergeschwindigkeit der Förderbänder 70a, 70b übereinstimmt. Die Tätigkeit der Greifeinrichtung, durch welche die Förderbänder 70a, 70b mit den Falz-Dachziegeln 4 bestückt werden, ist auf die Umlaufgeschwindigkeit der Förderkette 86 und auf den gegenseitigen Abstand der Prüfpaletten 84 darauf so abgestimmt, daß beim Eintritt in den Bereich der Prüfanlage 80 die Falz-Dachziegel 4 in eine mit den Prüfpaletten 84 korrespondierende Lage gelangen. Auch die Ausrichteinrichtung 100 kann in Abhängigkeit von dem Umlauf der Förderkette 86 so bezüglich ihrer Ausrichtfunktion gesteuert sein, daß die Lage der Falz-Dachziegel auf den Förderbändern 70a, 70b in deren Längsrichtung bestimmt werden kann.

Wie sich aus Fig. 7 ergibt, senken sich die Förderbänder 70a, 70b nach dem Passieren der am Eingang zur Prüfeinrichtung 80 angeordneten höher liegenden Stützrollen 71 ab, während gleichzeitig eine Prüfpalette 84 in mit dem jeweiligen Falz-Dachziegel 4 korrespondierender Stellung nach der Umlenkung um den an der Eingangsseite des Gestells 81, 82 vorgesehenen Bogen der Führungsschienen 83a, 83b zwischen die Förderbänder 70a, 70b eintritt. Hierdurch treten im Verlauf der Weiterförderung die Lagerköpfe 98 auf der Prüfkassette 91 in Kontakt mit der Unterseite des Falz-Dachziegels 4, wodurch dieser aufgrund des weiteren Absinkens der Förderbänder 70a, 70b von diesen nach oben abgehoben wird und ausschließlich auf den Lagerköpfen 98 aufliegt.

Die Prüfpaletten 84 wandern in die Meßkammer 99 ein. Im Eingangsbereich der Meßkammer 99 kann eine Einrichtung zur Feststellung der Lage der Falz-Dachziegel 4 auf den Lagerköpfen 98 vorgesehen sein, die bei einem Fehlen eines Falz-Dachziegels 4 oder einer bestimmte Toleranzgrenzen überschreitenden fehlerhaften Lagerung davon die nachfolgende Klangprüfung unterbindet. Diese Einrichtung zur Lagebestimmung kann in bekannter Weise z.B. mit Induktions- oder Ultraschall-Sensoren wirken; Lagebestimmungs-Einrichtungen solcher Art sind bekannt und bedürfen hier keiner näheren Erläuterung.

Die Meßkammer 99 kann auf ihrer Eingangs- und Ausgangsseite auch mit Schallschleusen ausgestattet sein, die eine Beeinträchtigung der Klangprüfung im Inneren verhindern. Es kann aber auch daran gedacht sein, die Durchführung der Klangprüfung auf die Fördergeschwindigkeit der Falz-Dachziegel 4 und damit auch der Prüfpaletten 84 so abzustimmen, daß der unmittelbar vor der Klangprüfung befindliche und der soeben der Klangprüfung unterzogene Falz-Dachziegel 4 sich gerade in der Eintrittsöffnung bzw. der Austrittsöffnung der Meßkammer 99 befinden, wenn an dem dazwischen liegenden Falz-Dachziegel die Klangprüfung durchgeführt wird. Bei einer an die Dachziegelform einigermassen angepassten Kontur der Eintritts- bzw. Austrittsöffnung wirkt somit der jeweils in dieser Öffnung befindliche Falz-Dachziegel 4 als Schallabdichtung, und gesonderte Schallschleusen sind nicht erforderlich

Am austrittsseitigen Ende des Gestells 81, 82 sinken die Prüfpaletten 84 wieder zwischen den Förderbändern 70a, 70b nach unten ab, weil dort die Führungsschienen 83a, 83b im Bogen nach unten verlaufen. Hierdurch kommen die auf den Lagerköpfen 98 befindlichen Falz-Dachziegel 4 wieder zur Auflage auf den Förderbändern 70a, 70b und werden von diesen weiter befördert, z.B. zu einer Verpackungsanlage. Die erneute Auflagerung der Falz-Dachziegel 4 auf den Förderbändern 70a, 70b kann in analoger Weise zu dem Vorgehen an der Eintrittsseite der Prüfanlage dadurch sanft erfolgen, daß austrittsseitig die Förderbänder 70a, 70b relativ zu dem Gestell 81, 82 ansteigend bewegt werden.

Wie eingangs erläutert, ermöglicht das erfindungsgemässe Verfahren aufgrund der dabei ermittelten Bewertungszahl eine Sortierung der der Klangprüfung unterzogenen Bauteile nach Qualitätsstufen. Diese Sortierung wird im Rahmen der geschilderten Fördereinrichtung mit Prüfanlage in der Weise vorgenommen, daß eine Sortier-Greifeinrichtung 110, die der Ausgangsseite der Meßkammer 99 zugeordnet ist, durch die darin befindliche Meßeinrichtung gesteuert wird. Ergibt die Klangprüfung, daß das geprüfte Bauteil den für eine Gut-Qualität vorgeschriebenen Bereich der Bewertungszahl zwar unterschreitet, jedoch noch in einem daran angrenzenden Bereich für die Bewertungszahl "Qualität noch ausreichend" liegt, dann wird durch den der Meßkammer 99 zugeordneten Rechner die Sortier-Greifeinrichtung 110 angesteuert. Diese nimmt daraufhin den die Meßkammer 99 verlassenden Falz-Dachziegel 4 von der Prüfpalette 84 ab und führt ihn einer anderen, nicht gezeigten Fördereinrichtung oder Verpackungseinrichtung zu.

Die Förderbänder 70a, 70b und die synchron damit umlaufende Förderkette 86 kann, wie eingangs schon erläutert, kontinuierlich oder taktweise bewegt werden.

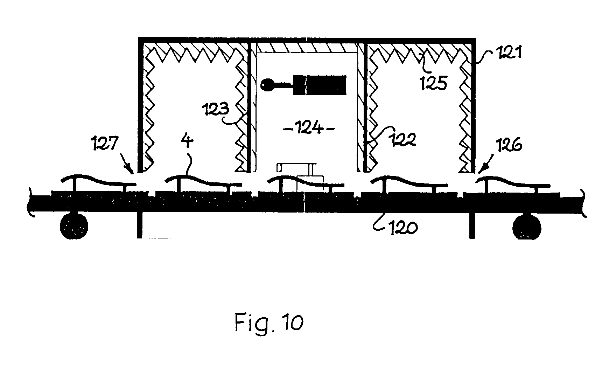

Die vorstehend bereits erwähnte Möglichkeit einer Schallabdichtung unter Heranziehung der in die Meßkammer eintretenden bzw. daraus austretenden Falz-Dachziegel ist in Fig. 10 näher dargestellt. Darin sind Falz-Dachziegel 4 auf einem Förderband 120 hintereinander angeordnet, das sich kontinuierlich oder taktweise durch eine Meßkammer 121 hindurch bewegt. Die Art des Antriebes des Förderbandes 120 ist nicht näher dargestellt. Die Meßkammer 121 ist durch zwei quer zur Förderrichtung verlaufende Trennwände 122, 123 in drei Abteile unterteilt, in deren mittlerem Abteil 124 die bereits in Zusammenhang mit Fig. 1 beschriebene Meßapparatur untergebracht ist. Die Innenwände der Meßkammer 121 einschl. der Trennwände 122, 123 sind mit einem Schalldämm-Material 125 ausgekleidet. Die Eintrittsöffnung 126 und die Austrittsöffnung 127 zu der Meßkammer 121 sind in ihrer Breite und Höhe gerade so bemessen, daß die Falz-Dachziegel 4 zusammen mit dem Förderband 120 passieren können. Die Länge der Meßkammer 121 in Förderrichtung ist so auf die Anordnung der Falz-Dachziegel 4 auf dem Förderband 120 abgestimmt, daß sich in der Eintrittsöffnung 126 und der Austrittsöffnung 127 jeweils ein Falz-Dachziegel mit einem Teil davon befindet, während in dem zentralen Abteil 124 ein Falz-Dachziegel der Schallprüfung unterzogen wird. Hierdurch schließen die in der Eintrittsöffnung und in der Austrittsöffnung befindlichen Falz-Dachziegel diese Öffnungen zumindest teilweise ab und verhindern in Verbindung mit den dem zentralen Abteil 124 zugeordneten Abteilen eine Schallstörung von außen.

Im Rahmen des Erfindungsgedankens sind Abwandlungen von Merkmalen der geschilderten Ausführungsbeispiele möglich, ohne dadurch die Erfindung zu verlassen. So wird das erfindungsgemässe Verfahren zwar in Zusammenhang mit Keramik-Bauteilen erläutert und hat für diese auch besondere Bedeutung, ist jedoch darauf nicht beschränkt. Neben den in den Ausführungsbeispielen beschriebenen Dachziegeln hat das Verfahren auch für Keramikrohre, z.B. Kaminrohre, und insbesondere für solche Keramikrohre Bedeutung, die relativ dünnwandig durch isostatisches Pressen hergestellt sind. Zu den durch das erfindungsgemässe Verfahren prüfbaren Bauteilen zählen aber auch solche aus Metall und sonstigen riß- und sprungempfindlichen Werkstoffen, die fehlerfrei sein müssen, um Risiken bei der Benutzung sicher auszuschalten. Hierbei kann es sich um Druckbehälter, Gasflaschen, Flaschen aus Glas od.dgl. handeln.

Auch ist die erwähnte punktförmige Auflagerung der Bauteile für die Klangprüfung von Vorteil, jedoch ist eine linienförmige Auflagerung mit dem entsprechend nachgiebigen Lagermaterial nicht auszuschließen, wenn die besondere Gestalt der zu prüfenden Bauteile eine ins Gewicht fallende Beeinträchtigung der Klangprüfung nicht befürchten lässt. Dies gilt z.B. dann, wenn Bauteile erwartungsgemäß ausgeprägt linienförmige Knoten der Eigenschwingungsformen aufweisen und somit eine linienförmige Auflagerung im Bereich solcher Knotenlinien denkbar ist. Unter einer linienförmigen Auflagerung in diesem Sinn kann auch eine grössere Anzahl von hintereinander folgenden punktförmigen Auflagerungen verstanden werden.

Weiterhin ist zur Steigerung der Meßqualität, d.h. zur Ausschaltung von Störgeräuschen, in dem geschilderten Ausführungsbeispiel vorgeschlagen, das Klangspektrum erst ab einer bestimmten Lautstärke aufzunehmen und zu analysieren. Abweichend hiervon wird aber ein ähnlicher Effekt erzielt, wenn die Aufnahme nur in einem zeitlich genau definierten Intervall erfolgt, was durch eine mit der Schlageinrichtung ggf. gekoppelte Sensorik möglich ist.

## Patentansprüche

1. Verfahren zur Qualitätsprüfung von Bauteilen mittels Klangmessung, insbesondere von Keramikteilen, bei dem ein Bauteil mechanisch angeschlagen und dadurch zur akustischen Klangabstrahlung angeregt wird, das Klangspektrum aufgenommen und über einen vorbestimmten Frequenzbereich hinweg bezüglich der den Frequenzanteilen zugeordneten Amplituden analysiert und mittels eines Rechners bewertet wird,
**dadurch gekennzeichnet,**
daß mittels des Rechners die Amplituden des Amplituden-Frequenzspektrums summiert werden, die Amplitudensumme durch die Anzahl der zwischen den Peaks der Frequenzanteile in dem Amplituden-Frequenzspektrum vorhandenen Wendepunkte dividiert wird, der erhaltene Quotient, als Bewertungszahl definiert, mit einer vorgegebenen, eine gute Bauteilqualität repräsentierenden Bezugs-Bewertungszahl verglichen und bei Abweichung des Quotienten von der Bezugs-Bewertungszahl über ein bestimmtes Ausmaß hinaus die mangelnde Qualität des Bauteils durch den Rechner festgestellt wird.

2. Verfahren nach Anspruch 1,
**dadurch gekennzeichnet,**
daß für die Aufnahme des Klangspektrums ein Schwellenwert der Lautstärke festgelegt und nur der den Schwellenwert übersteigende Wert des Klangspektrums aufgenommen und analysiert wird.

3. Verfahren nach Anspruch 1,
**dadurch gekennzeichnet,**
daß für die Aufnahme des Klangspektrums ein Zeitintervall festgelegt ist, dessen Beginn auf das mechanische Anschlagen des Bauteils abgestimmt ist, und daß nur das in dem Zeitintervall aufgenommene Klangspektrum analysiert wird.

4. Verfahren nach einem der Ansprüche 1 bis 3,
**dadurch gekennzeichnet,**
daß aus dem Amplituden-Frequenzspektrum ein zumindest die Grund-Eigenfrequenzen enthaltendes Frequenz fenster ausgewählt und aus diesem die Amplitudensumme bestimmt wird.

5. Verfahren nach Anspruch 1
**dadurch gekennzeichnet,**
daß das bestimmte Ausmaß der Abweichung durch einen ersten Grenzwert als Gut-Bereich der Qualität definiert wird.

6. Verfahren nach Anspruch 5,
**dadurch gekennzeichnet,**
daß zusätzlich zu dem Gut-Bereich mindestens ein weiterer Bereich durch mindestens einen weiteren Grenzwert definiert wird, der Bewertungszahlen entsprechend noch zulässiger Qualität des Bauteils enthält.

7. Verfahren nach einem der Ansprüche 1 bis 6,
**dadurch gekennzeichnet,**
daß das Bauteil in bewegtem Zustand angeschlagen wird, wobei das Anschlagen zumindest mit einer Bewegungskomponente in Bewegungsrichtung des Bauteils ausgeführt wird.

8. Verfahren nach einem der Ansprüche 1 bis 7,
**dadurch gekennzeichnet,**
daß das Bauteil zumindest während des Anschlagens und der Frequenzanalyse weich-elastisch aufgelagert ist.

9. Verfahren nach einem der Ansprüche 1 bis 8,
**dadurch gekennzeichnet,**
daß bei der Klangmessung mehrerer gleicher Bauteile jedes Bauteil an der gleichen Stelle angeschlagen wird.

10. Verfahren nach einem der Ansprüche 1 bis 9,
**dadurch gekennzeichnet,**
daß jedes Bauteil vor dem Anschlagen durch einen Schlag bestimmter Kraft vorbeansprucht wird.

11. Verfahren nach einem der Ansprüche 1 bis 10,
**dadurch gekennzeichnet,**
daß Lage und Orientierung des Bauteils bezüglich der Auflagerpunkte vor dessen Auflagerung ermittelt und ggf. korrigiert werden.

12. Einrichtung zur Qualitätsprüfung von Bauteilen (4) mittels Klangmessung, insbesondere von Keramik-Dachziegeln, zur Durchführung des Verfahrens nach einem der Ansprüche 1 bis 11, mit einer Lagervorrichtung zur weich-elastischen Auflagerung eines Bauteils, einem Schlagelement (5) zum mechanischen Anschlagen des Bauteils, einem Mikrofon (2) zur Aufnahme des Klangspektrums des angeschlagenen Bauteils und einem Rechner (6, 7) zur Amplituden-Frequenz-Analyse des von dem Mikrofon aufgenommenen Klangspektrums, dadurch gekennzeichnet, daß die der Auflagerung dienenden Lagerelemente entsprechend dem zu erwartenden Schwingverhalten des Bauteils im Bereich von Schwingungsknotenlinien angeordnet sind.

13. Einrichtung nach Anspruch 12,
**dadurch gekennzeichnet,**
daß nur wenige, z.B. drei, punktförmige Lagerelemente (32, 33; 98) vorgesehen sind.

14. Einrichtung nach Anspruch 12 oder 13,
**dadurch gekennzeichnet,**
daß die Lagerelemente Auflagerstifte mit an ihrem oberen Ende angeordneten gummielastischen Köpfen (33) sind.

15. Einrichtung nach einem der Ansprüche 12 bis 14,
**dadurch gekennzeichnet,**
daß die Lagervorrichtung (3) einen Stützrahmen (30) umfasst, auf dem die Lagerelemente (32, 33) zur Anpassung an das Bauteil (4) längs- und querverstellbar angeordnet sind.

16. Einrichtung nach Anspruch 15,
**dadurch gekennzeichnet,**
daß die Lagerelemente höhenverstellbar sind.

17. Einrichtung nach einem der Ansprüche 12 bis 14,
**dadurch gekennzeichnet,**
daß die Lagerelemente (98) auf einer Prüfkassette (91) unverstellbar angeordnet und an ein Bauteil (4) angepasst sind.

18. Einrichtung nach Anspruch 17,
**dadurch gekennzeichnet,**
daß die Prüfkassette (91) austauschbar auf einer Lagervorrichtung (84) befestigt ist.

19. Einrichtung nach einem der Ansprüche 12 bis 18,
**dadurch gekennzeichnet,**
daß die Lagervorrichtung (3) stationär in einer Meßkammer (1) angeordnet ist und eine Greif- und Ablegevorrichtung zum Einbringen von Bauteilen in die Meßkammer und zu dem Auflegen der Bauteile auf die Lagervorrichtung vorgesehen ist.

20. Einrichtung nach einem der Ansprüche 12 bis 19,
**dadurch gekennzeichnet,**
daß eine Mehrzahl von Lagervorrichtungen (84) auf einer Fördereinrichtung (86) für die Bauteile angeordnet sind und die Fördereinrichtung eine Meßkammer (99) taktweise oder kontinuierlich durchläuft.

21. Einrichtung nach einem der Ansprüche 12 bis 20,
**dadurch gekennzeichnet,**
daß die Lagervorrichtung (84) im Bereich der Meßkammer (99) heb- und senkbar zwischen zwei die Enden von geförderten Bauteilen (4) abstützenden Trumen (70a, 70b) einer Fördereinrichtung angeordnet ist.

22. Einrichtung nach Anspruch 20 oder 21,
**dadurch gekennzeichnet,**
daß der Meßkammer (99) in Bezug auf die die Bauteile fördernde Fördereinrichtung eine Einrichtung (100) zur Lagekontrolle und ggf. Lagekorrektur der Bauteile relativ zu der Lagervorrichtung (84) vorgeschaltet ist.

23. Einrichtung nach Anspruch 21,
**dadurch gekennzeichnet,**
daß an der heb- und senkbaren Lagervorrichtung eine trichterförmige Ausrichtvorrichtung angeordnet ist, welche beim Anheben der Lagervorrichtung ein auf den Trumen der Fördereinrichtung aufliegendes Bauteil zunächst relativ zu der Lagervorrichtung ausrichtet.

24. Einrichtung nach einem der Ansprüche 12 bis 23,
**dadurch gekennzeichnet,**
daß das Schlagelement (5) ein elektromagnetisch oder pneumatisch betätigbarer Klöppel ist.

25. Einrichtung nach Anspruch 24,
**dadurch gekennzeichnet,**
daß der Klöppel eine Klöppelfinne (51) aus einem harten oder einem hart-elastischen Material aufweist, das härter als das Material der Lagerelemente (33, 98) ist.

26. Einrichtung nach einem der Ansprüche 19 bis 25,
**dadurch gekennzeichnet,**
daß die Meßkammer schallgeschützt ausgebildet ist.

27. Einrichtung nach Anspruch 26,
**dadurch gekennzeichnet,**
daß die Meßkammer an ihrer Eintrittsöffnung und ggf. an einer Austrittsöffnung mit Schallschutzschleusen ausgestattet ist.

28. Einrichtung nach einem der Ansprüche 12 bis 27,
**dadurch gekennzeichnet,**
daß die Meßkammer zur Aufnahme einer Mehrzahl von zu messenden Bauteilen ausgebildet ist.

29. Einrichtung nach einem der Ansprüche 26 bis 28,
**dadurch gekennzeichnet,**
daß die Eintrittsöffnung bzw. Austrittsöffnung der Meßkammer (99) in ihrer Kontur an die Form der Bauteile angepasst ist und in der Eintrittsöffnung bzw. Austrittsöffnung befindliche Bauteile als Schallschutz wirken.

30. Einrichtung nach einem der Ansprüche 12 bis 29,
**dadurch gekennzeichnet,**
daß sie eine Sortiereinrichtung (110) zur Einordnung der Bauteile in unterschiedliche Qualitätsklassen umfasst und daß die Sortiereinrichtung durch den Rechner (6, 7) derart gesteuert ist, daß Bauteile mit einer Bewertungszahl außerhalb eines Gut-Bereiches, jedoch innerhalb eines Bereiches noch zulässiger Qualität als Bauteile nicht guter, jedoch noch zulässiger Qualität gekennzeichnet werden.

31. Einrichtung nach Anspruch 30,
**dadurch gekennzeichnet,**
daß die Sortiereinrichtung (110) eine Greifeinrichtung ist, durch die Bauteile nicht guter, jedoch noch zulässiger Qualität ergriffen und durch Aussonderung gekennzeichnet werden.

32. Einrichtung nach Anspruch 30 oder 31,
**dadurch gekennzeichnet,**
daß die Sortiereinrichtung Bauteile nicht guter, jedoch noch zulässiger Qualität durch eine Markierung kennzeichnet.

33. Einrichtung nach einem der Ansprüche 20 bis 32,
**dadurch gekennzeichnet,**
daß das Schlagelement (5) bei einem Anschlagen in bewegtem Zustand des Bauteils derart angeordnet ist, daß das Anschlagen mit einer Bewegungskomponente in Bewegungsrichtung des Bauteils erfolgt.

## Claims

1. A method of quality control of components by means of sound measurement, in particular ceramic parts, in which a component is mechanically struck and thereby stimulated to acoustic sound radiation, the sound spectrum is recorded and analysed over a predetermined frequency range in respect of the amplitudes associated with the frequency components, and evaluated by means of a computer, characterised in that by means of the computer the amplitudes of the amplitude frequency spectrum are summed, the amplitude sum is divided by the number of the inflection points present between the peaks of the frequency components in the amplitude frequency spectrum, the quotient obtained, defined as an evaluation number, is compared to a predetermined reference evaluation number representing a good component quality, and in the event of a deviation of the quotient from the reference evaluation number beyond a given extent the inadequate quality of the component is established by the computer.

2. A method according to claim 1 characterised in that for recording of the sound spectrum a threshold value in respect of volume is established and only the value of the sound spectrum, that exceeds the threshold value, is recorded and analysed.

3. A method according to claim 1 characterised in that for recording of the sound spectrum, a time interval is established, the beginning of which is matched to the mechanical striking of the component, and that only the sound spectrum recorded in the time interval is analysed.

4. A method according to one of claims 1 to 3 characterised in that a frequency window containing at least the fundamental natural frequencies is selected from the amplitude frequency spectrum and the amplitude sum is determined from said frequency window.

5. A method according to claim 1 characterised in that the given extent of the deviation is defined by a first limit value as the quality good range.

6. A method according to claim 5 characterised in that in addition to the good range at least one further range is defined by at least one further limit value which includes evaluation numbers of correspondingly still admissible component quality.

7. A method according to one of claims 1 to 6 characterised in that the component is struck in the moving condition, wherein striking is effected at least with a component of movement in the direction of movement of the component to be struck.

8. A method according to one of claims 1 to 7 characterised in that the component is softly-elastically supported at least during the striking step and the frequency analysis step.

9. A method according to one of claims 1 to 8 characterised in that in the sound measurement of a plurality of identical components each component is struck at the same place.

10. A method according to one of claims 1 to 9 characterised in that prior to the striking step each component is pre-stressed by a hit of given force.

11. A method according to one of claims 1 to 10 characterised in that the position and orientation of the component with respect to the support points are ascertained and possibly corrected prior to the component being supported.

12. Apparatus for quality control of components (4) by means of sound measurement, in particular ceramic roof tiles, for carrying out the method according to one of claims 1 to 11, comprising a support device for softly-elastically supporting a component, a striking element (5) for mechanically striking the component, a microphone (2) for recording the sound spectrum of the struck component and a computer (6, 7) for amplitude frequency analysis of the sound spectrum recorded by the microphone, characterised in that the support elements serving for supporting the component are arranged in accordance with the oscillation characteristics to be expected of the component in the region of oscillation node lines.

13. Apparatus according to claim 12 characterised in that there are provided only a few, for example three, punctiform support elements (32, 33; 98).

14. Apparatus according to claim 12 or claim 13 characterised in that the support elements are support pins with resilient heads (33) arranged at their upper ends.

15. Apparatus according to one of claims 12 to 14 characterised in that the support device (3) includes a support frame (30) on which the support elements (32, 33) are longitudinally and transversely displaceably arranged for adaptation to the component (4).

16. Apparatus according to claim 15 characterised in that the support elements are adjustable in respect of height.

17. Apparatus according to one of claims 12 to 14 characterised in that the support elements (98) are arranged non-displaceably on a test cassette (91) and are adapted to a component (4).

18. Apparatus according to claim 17 characterised in that the test cassette (91) is interchangeably fixed on a support device (84).

19. Apparatus according to one of claims 12 to 18 characterised in that the support device (3) is arranged stationarily in a measuring chamber (1) and there is provided a gripping and depositing device for introducing components into the measuring chamber and for laying the components on the support device.

20. Apparatus according to one of claims 12 to 19 characterised in that a plurality of support devices (84) are disposed on a conveyor arrangement (86) for the components and the conveyor arrangement passes through a measuring chamber (99) cyclically or continuously.

21. Apparatus according to one of claims 12 to 20 characterised in that the support device (84) is arranged in the region of the measuring chamber (99) raisably and lowerably between two runs (70a, 70b) of a conveyor arrangement, which runs support the ends of conveyed components (4).

22. Apparatus according to claim 20 or claim 21 characterised in that disposed upstream of the measuring chamber (99) in relation to the conveyor arrangement for conveying the components is a device (100) for positional monitoring and possibly correction of the components relative to the support device (84).

23. Apparatus accoridng to claim 21 characterised in that arranged on the raisable and lowerable support device is a funnel-shaped aligning device which when the support device is raised firstly aligns a component lying on the runs of the conveyor arrangement relative to the support device.

24. Apparatus according to one of claims 12 to 23 characterised in that the striking element (5) is an electromagnetically or pneumatically actuable hammer.

25. Apparatus according to claim 24 characterised in that the hammer has a hammer peen (51) comprising a hard or a hard-elastic material which is harder than the material of the support elements (33, 98).

26. Apparatus according to one of claims 19 to 25 characterised in that the measuring chamber is of a sound-proofed nature.

27. Apparatus according to claim 26 characterised in that the measuring chamber is provided with sound-proofing lock arrangements at its intake opening and possibly at an exit opening.

28. Apparatus according to one of claims 12 to 27 characterised in that the measuring chamber is designed to receive a plurality of components to be measured.

29. Apparatus according to one of claims 26 to 28 characterised in that the intake opening or exit opening of the measuring chamber (29) respectively is adapted in its contour to the shape of the components and components disposed in the intake opening or exit opening respectively act as sound proofing.

30. Apparatus according to one of claims 12 to 29 characterised in that it includes a sorting device (110) for putting the components into different quality classes and that the sorting device is controlled by the computer (6, 7) in such a way that components with an evaluation number outside a good range but within a range of still admissible quality are identified as components of not-good but still admissible quality.

31. Apparatus according to claim 30 characterised in that the sorting device (110) is a gripping device by which components of non-good but still admissible quality are gripped and identified by being separated out.

32. Apparatus according to claim 30 or claim 31 characterised in that the sorting device identifies components of not-good but still admissible quality by a marking.

33. Apparatus according to one of claims 20 to 32 characterised in that when the component is struck in the moving condition thereof the striking element (5) is arranged in such a way that the striking step is effected with a component of movement in the direction of movement of the component to be struck.

## Revendications

1. Procédé de contrôle de la qualité d'éléments de construction au moyen d'une mesure sonore, en particulier d'éléments en céramique, dans lequel un élément de construction est fixé mécaniquement et, de ce fait, provoque le rayonnement du son acoustique, procédé au cours duquel le spectre sonore est capté et analysé via une gamme de fréquences prédéterminée concernant les amplitudes associées aux secteurs de fréquences, et est évalué au moyen d'un ordinateur,
caractérisé en ce que, au moyen de l'ordinateur, les amplitudes du spectre d'amplitude-fréquence sont totalisées,
en ce que la somme des amplitudes est divisée par le nombre des points sensibles d'inversion entre les pics des secteurs de fréquences du spectre d'amplitude-fréquence,
en ce que le quotient obtenu est défini en tant que nombre nominal et qu'il est comparé à un nombre nominal de référence prédéterminé représentant une bonne qualité de l'élément de construction, et
en ce que, dans le cas d'un écart, d'une certaine ampleur, du quotient par rapport au nombre nominal de référence, le défaut de qualité de l'élément de construction est constaté par l'ordinateur.

2. Procédé selon la revendication 1,
caractérisé en ce que, pour capter le spectre sonore, une valeur de seuil de l'intensité sonore est déterminée, et
en ce que seule la valeur du spectre sonore dépassant la valeur de seuil est captée et analysée.

3. Procédé selon la revendication 1,
caractérisé en ce que, pour capter le spectre sonore, un intervalle de temps est déterminé dont le début coïncide avec la fixation mécanique de l'élément de construction, et
en ce que seul le spectre sonore capté dans l'intervalle de temps est analysé.

4. Procédé selon l'une quelconque des revendications 1 à 3,
caractérisé en ce que, à partir du spectre d'amplitude-fréquence, on sélectionne une fenêtre de fréquence contenant au moins les fréquences propres de base, et
en ce que le total des amplitudes est défini à partir de cette fenêtre.

5. Procédé selon la revendication 1,
caractérisé en ce que l'ampleur déterminée de l'écart est définie par une première valeur limite en tant que plage satisfaisante de la qualité.

6. Procédé selon la revendication 5,
caractérisé en ce que, en plus de la plage satisfaisante, au moins une autre zone est définie au moins par une autre valeur limite, laquelle zone contient des nombres nominaux correspondant à la qualité encore admissible de l'élément de construction.

7. Procédé selon l'une quelconque des revendications 1 à 6,
caractérisé en ce que l'élément de construction est fixé à l'état mobile, où la fixation est réalisée au moins avec un composant de mouvement dans la direction de mouvement de l'élément de construction.

8. Procédé selon l'une quelconque des revendications 1 à 7,
caractérisé en ce que l'élément de construction, au moins pendant la fixation et l'analyse des fréquences, est en appui de façon souple et élastique.

9. Procédé selon l'une quelconque des revendications 1 à 8,
caractérisé en ce que, pendant la mesure sonore de plusieurs éléments de construction identiques, chaque élément de construction est fixé au même endroit.

10. Procédé selon l'une quelconque des revendications 1 à 9,
caractérisé en ce que chaque élément de construction, avant la fixation, est soumis à une précontrainte sous l'effet d'un impact d'une certaine force.

11. Procédé selon l'une quelconque des revendications 1 à 10,
caractérisé en ce que la position et l'orientation de l'élément de construction, concernant les points d'appui, avant la mise en place de l'élément de construction, sont calculées et éventuellement corrigées.

12. Dispositif de contrôle de la qualité d'éléments de construction (4) au moyen de la mesure sonore, notamment de tuiles en céramique, pour l'exécution du procédé selon l'une quelconque des revendications 1 à 11 comprenant :
- un dispositif d'appui pour l'application souple et élastique d'un élément de construction,
- un élément d'impact (5) pour la fixation mécanique de l'élément de construction,
- un microphone (2) pour capter le spectre sonore de l'élément de construction fixé, et
- un ordinateur (6, 7) pour l'analyse de l'amplitude-fréquence du spectre sonore capté par le microphone,
caractérisé en ce que les éléments d'appui, servant à l'application et correspondant au comportement vibratoire attendu de l'élément de construction, sont disposés dans la zone de lignes de noeuds de vibrations.

13. Dispositif selon la revendication 12,
caractérisé en ce qu'il est prévu seulement quelques éléments d'appui ponctuels (32, 33 ; 98), par exemple trois.

14. Dispositif selon la revendication 12 ou 13,
caractérisé en ce que les éléments d'appui sont des pointes d'appui comprenant des têtes (33) ayant l'élasticité du caoutchouc et disposées sur l'extrémité supérieure des pointes.

15. Dispositif selon l'une quelconque des revendications 12 à 14,
caractérisé en ce que le dispositif d'appui (3) comprend un cadre support (30) sur lequel les éléments d'appui (32, 33) sont disposés pour s'adapter à l'élément de construction (4) en étant réglables longitudinalement et transversalement.

16. Dispositif selon la revendication 15,
caractérisé en ce que les éléments d'appui sont réglables en hauteur.

17. Dispositif selon l'une quelconque des revendications 12 à 14,
caractérisé en ce que les éléments d'appui (98) sont disposés en étant indéréglables sur une cassette de contrôle (91) et en ce qu'ils sont adaptés à un élément de construction (4).

18. Dispositif selon la revendication 17,
caractérisé en ce que la cassette de contrôle (91) est fixée, en étant remplaçable, sur un dispositif d'appui (84).

19. Dispositif selon l'une quelconque des revendications 12 à 18,
caractérisé en ce que le dispositif d'appui (3) est disposé en étant fixe dans une chambre de mesure (1), et
en ce qu'un dispositif de préhension et de réception est prévu pour introduire des éléments de construction dans la chambre de mesure et pour poser les éléments de construction sur le dispositif d'appui.

20. Dispositif selon l'une quelconque des revendications 12 à 19,
caractérisé en ce que plusieurs dispositifs d'appui (84) sont disposés sur un dispositif de transport (86) des éléments de construction, et
en ce que le dispositif de transport traverse une chambre de mesure (99) de façon intermittente ou de façon continue.

21. Dispositif selon l'une quelconque des revendications 12 à 20,
caractérisé en ce que le dispositif d'appui (84) est disposé dans la zone de la chambre de mesure (99), de façon à pouvoir monter et descendre entre deux brins (70a, 70b) d'un dispositif de transport soutenant les extrémités d'éléments de construction (4) transportés.

22. Dispositif selon la revendication 20 ou 21,
caractérisé en ce qu'un dispositif (100) pour le contrôle de position et éventuellement pour la correction de position des éléments de construction, par rapport au dispositif d'appui (84), est placé en amont de la chambre de mesure (99) par rapport au dispositif de transport transportant les éléments de construction.

23. Dispositif selon la revendication 21,
caractérisé en ce qu'un dispositif d'alignement en forme d'entonnoir est disposé sur le dispositif d'appui pouvant monter et descendre, lequel dispositif d'alignement, lors du relevage du dispositif d'appui, aligne un élément de construction en appui sur les brins du dispositif de transport, d'abord par rapport au dispositif d'appui.

24. Dispositif selon l'une quelconque des revendications 12 à 23,
caractérisé en ce que l'élément d'impact (5) est un marteau pouvant être actionné électromagnétiquement ou pneumatiquement.

25. Dispositif selon la revendication 24,
caractérisé en ce que le marteau comprend une queue de marteau (51) dans un matériau dur ou dans un matériau dur et élastique qui est plus dur que le matériau des éléments d'appui (33, 98).

26. Dispositif selon l'une quelconque des revendications 19 à 25,
caractérisé en ce que la chambre de mesure est configurée en étant insonorisée.

27. Dispositif selon la revendication 26,
caractérisé en ce que la chambre de mesure, au niveau de son ouverture d'entrée et éventuellement de son ouverture de sortie, est dotée de sas d'isolation acoustique.

28. Dispositif selon l'une quelconque des revendications 12 à 27,
caractérisé en ce que la chambre de mesure est configurée pour recevoir plusieurs éléments de construction à mesurer.

29. Dispositif selon l'une quelconque des revendications 26 à 28,
caractérisé en ce que l'ouverture d'entrée ou l'ouverture de sortie de la chambre de mesure (99) est adaptée, dans son contour, à la forme des éléments de construction, et
en ce que, dans l'ouverture d'entrée ou l'ouverture de sortie, les éléments de construction s'y trouvant servent d'isolants acoustiques.

30. Dispositif selon l'une quelconque des revendications 12 à 29,
caractérisé en ce que le dispositif comprend un dispositif de tri (110) pour ranger les éléments de construction en différentes classes de qualité, et
en ce que le dispositif de tri est commandé par l'ordinateur (6, 7) de façon telle que des éléments de construction ayant un nombre nominal en dehors d'une plage satisfaisante, mais cependant à l'intérieur d'une plage de qualité encore admissible, sont caractérisés comme des éléments de construction de qualité non satisfaisante mais cependant encore admissible.

31. Dispositif selon la revendication 30,
caractérisé en ce que le dispositif de tri (110) est un dispositif de préhension, au moyen duquel les éléments de construction de qualité non satisfaisante mais cependant encore admissible sont saisis et caractérisés par un tri.

32. Dispositif selon la revendication 30 ou 31,
caractérisé en ce que le dispositif de tri désigne, par un marquage, des éléments de construction de qualité non satisfaisante mais cependant encore admissible.

33. Dispositif selon l'une quelconque des revendications 20 à 32,
caractérisé en ce que l'élément d'impact (5), lors d'une fixation dans l'état mobile de l'élément de construction, est disposé de façon telle que la fixation a lieu avec un composant de mouvement dans la direction de mouvement de l'élément de construction.
